# EUROPEAN PATENT SPECIFICATION

(11) **EP 3 633 829 B1**
(45) Date of publication and mention of the grant of the patent: **20.12.2023**
(21) Application number: 18465583.5
(22) Date of filing: 01.10.2018
(51) Int. Cl.: H02K 5/22, H02K 11/30, F02D 9/10, H01R 43/00, F02D 11/10, F02B 37/18, H01R 13/05

(54) **MOTOR CONTROL UNIT FOR AN ELECTRIC MOTOR, MOTOR ASSEMBLY AND PROCESS FOR ASSEMBLING A MOTOR ASSEMBLY**
MOTORSTEUEREINHEIT FÜR EINEN ELEKTROMOTOR, MOTORANORDNUNG UND VERFAHREN ZUR MONTAGE EINER MOTORANORDNUNG
UNITÉ DE COMMANDE DE MOTEUR POUR UN MOTEUR ÉLECTRIQUE, ENSEMBLE MOTEUR ET PROCÉDÉ D'ASSEMBLAGE D'UN ENSEMBLE MOTEUR

(43) Date of publication of application: 08.04.2020
(73) Proprietor: Vitesco Technologies GmbH, 93055 Regensburg (DE)
(72) Inventor: Petca, Ovidiu Claudiu, 300245 Timisoara (RO); Telescu, Samuel, 307289 Urseni (RO)
(74) Representative: Vitesco Technologies

(56) References cited:
- DE-A1-102009 057 491
- DE-A1-102010 001 545
- DE-U- 7 328 355
- JP-A- H1 040 984
- JP-A- 2005 052 850
- JP-A- 2007 047 183
- JP-A- 2007 278 123
- JP-A- 2011 096 695
- US-A1- 2008 224 553
- US-A1- 2017 256 875

## Description

The present invention relates to a motor assembly and to a process for assembling the motor assembly.

In turbocharged vehicles, a wastegate is used to divert exhaust gases away from the turbine wheel to prevent a built-up of exhaust pressure. One possible way to actuate a wastegate of the vehicle is by using an electric motor which opens and closes the wastegate according to demand. The electric motor is controlled by a motor control unit which is often integrated with the electric motor in a common housing. Typically, the motor control unit comprises a number of motor control devices, for example a microcontroller or a microprocessor, which are arranged on a leadframe and at least partially overmolded with a plastic housing to protect the electronic components from the environment.

To electrically connect the motor control unit to the electric motor, pins of the leadframe have to be connected to terminals of the electric motor. This is done by inserting connectors of a metal material which bridge the distance between the pins of the leadframe and the terminals of the electric motor and which are welded to the pins as well as to the terminals.

Other possibilities to connect a motor control unit to an electric motor are known from EP 153832182, which discloses an electronically controlled throttle device.

Document JP 2007 287123 A discloses a motor control unit with a different type of housing, wherein leads embedded in a housing are contacted by way of an opening in the housing.

Document US 2017 256 875 A1 comprises a socket housing and a contact assembly process that includes forming a solder ball contact region after initially installing a set of contacts into the housing.

It is an object of the present invention to facilitate the connection of the pins of the leadframe with the electric motor and thereby to simplify the assembly of the motor assembly.

This object is achieved by means of the motor assembly according to claim 1, and the process for assembling the motor assembly according to claim 7.

Advantageous embodiments and developments are objects of the dependent claims.

The motor control unit has the advantage that the pins can be in an original, unbent orientation during molding, which facilitates the molding process. When the motor control unit is assembled with the electric motor, the pins can be bent out of the original orientation into an assembly orientation, in which they make contact with the terminals of the electric motor. Thus, no separate connector is needed. Furthermore, the number of welding points is reduced.

The motor control unit can be used for any electrically actuated valve of a vehicle where the electric motor and its motor control unit are integrated in a common housing, for example a throttle valve or a wastegate.

The weak portion, which is a portion yielding more easily to a bending force than surrounding portions of the pin, may be provided by a portion with a reduced material thickness. According to this embodiment, there is a portion between the first portion and the second portion, where the pin has a reduced thickness and can be bent easily and in a controlled way. The reduced material thickness may be produced during stamping of the leadframe or by a cut-out at a later step.

Additionally, or alternatively, the weak portion may be provided by a portion having no reinforcement structure, while the first portion and the second portion comprise a reinforcement structure. Such a reinforcement structure may be provided by a portion of material being arranged perpendicular to the pin.

According to this embodiment, the first portion and the second portion comprise reinforcement structures, while the weak portion has no reinforcement and therefore can be bent more easily.

The reinforcement structure may also be produced during stamping of the leadframe.

The weak portion has been bent out of an original orientation into an assembly orientation in which the pins make contact with terminals of the electric motor.

The bent portion may be identified by a zone of material deformation of the pin.

The motor assembly has the advantages described above in connection with the motor control unit.

According to an embodiment, the first portion and the second portion are perpendicular to each other.

According to this embodiment, the pin is bent vertically, that is around an axis parallel to a main plane of the assembly, by an angle of about 90° during assembly. This has the advantage, that the bending by 90 degrees can be implemented very easily in the production line with applying a bending force from above. Furthermore, a pin that has to be bent vertically into an assembly orientation can have smaller horizontal dimensions and it can be inserted more easily into an opening of the housing during assembly.

The second portion can be connected to the motor terminal by welding. According to the present invention, only one welding point per pin is needed, which makes the assembly more economical.

Further, a process for assembling the described motor assembly is provided. The process comprises providing the described motor control unit and providing an electric motor for actuating a valve of a vehicle. Furthermore, a housing for receiving the motor control unit and the electric motor is provided and the motor control unit and the electric motor are assembled with the housing. After this, a force is applied on the pins to bend them from their original orientation into the assembly orientation and the second portions of the pins are connected to terminals of the electric motor.

The second portions of the pins may be connected to the terminals of the electric motor by welding. Alternatively, they could be connected by clamping or some other means of electrical connection.

According to an embodiment, the pins are bent from the original orientation into the assembly orientation vertically by an angle α of 90° as described above. Alternatively, the pins can be bent from the original orientation into the assembly orientation horizontally by an angle α with α ≤ 90°.

Further advantages, advantageous embodiments and developments of the motor control unit, the motor assembly and the process for assembling a motor assembly will become apparent from the exemplary embodiments which are described below in association with the schematic figures.
- Figure 1: shows a perspective view of a motor assembly according to a first embodiment of the invention,
- Figure 2: shows a plan view of a first side of the motor assembly according to figure 1,
- Figure 3: shows a perspective view of the motor assembly according to figure 1 during a further assembly step,
- Figure 4: shows a plan view of the motor assembly according to figure 3,
- Figure 5: shows a side view of a detail of the motor assembly according to figures 3 and 4,
- Figure 6: shows several views of a pin of the motor assembly according to figure 1,
- Figure 7: shows several views of the pin according to figure 6 during a later processing step,
- Figure 8: shows several views of the pin according to figures 6 and 7 in a further processing step,
- Figure 9: shows a plan view of the motor assembly according to a second embodiment of the invention and
- Figure 10: shows a perspective view of a pin 9 according to the second embodiment.

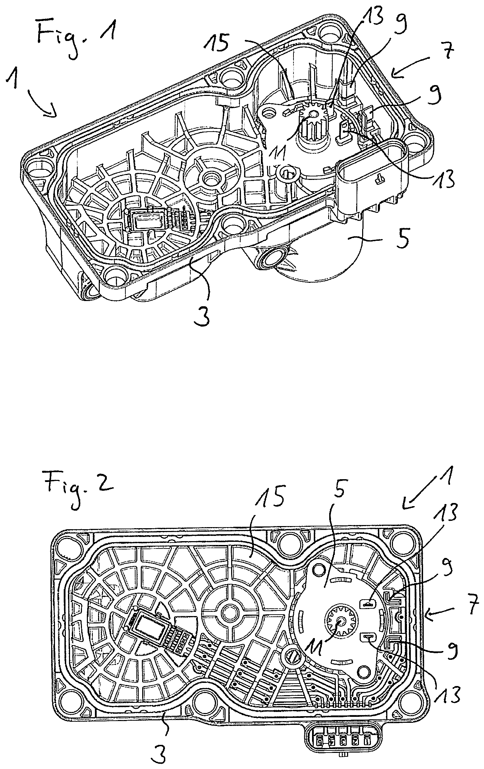

The motor assembly 1 according to figures 1 and 2 comprises a housing 3, which is typically made of metal and produced in a casting process. The housing 3 receives an electric motor 5 which has a shaft 11 protruding on a first side 15 of the motor assembly 1. Furthermore, two terminals 13 of the electric motor 5 for electric connection of the motor 5 to a motor control unit 7 protrude from the first side 15 of the motor assembly 1.

The housing 3 also receives a motor control unit 7 which comprises a number of motor control devices arranged on a leadframe and overmolded with a plastic housing. Since the motor control unit 7 is arranged on a second side of the motor assembly 1, which is not shown in figure 1, only the pins 9 of the motor control unit 7 are shown in the figures. The two pins 9 protrude on the first side 15 of the motor assembly 1 and are provided to electrically connect the electric motor 5 to the motor control unit 7. Therefore, the pins 9 have to be brought into electrical contact with the terminals 13 during assembly. To make contact between the pins 9 and the terminals 13, the distance between them has to be bridged.

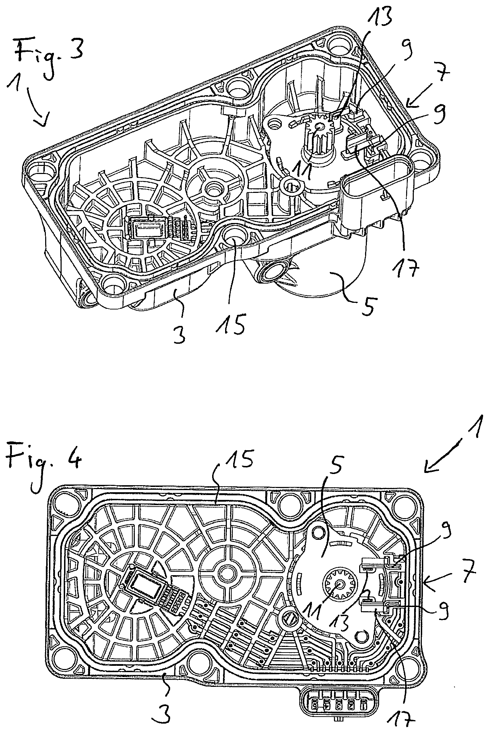

Figure 3 shows a perspective view of the motor assembly 1 according to figure 1 during an assembly step, in which the pins 9 are connected to the terminals 13. A plan view of the motor assembly 1 during this assembly step is shown in figure 4.

As can be seen in figure 3 and 4, a second portion 17 of the pins 9 has been bent and brought into contact with the terminals 13. By bending the second portion 17 downwards, the distance between the pins 9 and the terminals 13 has been bridged. When the pins 9 have thus been brought into contact with the terminals 13, they are connected by welding.

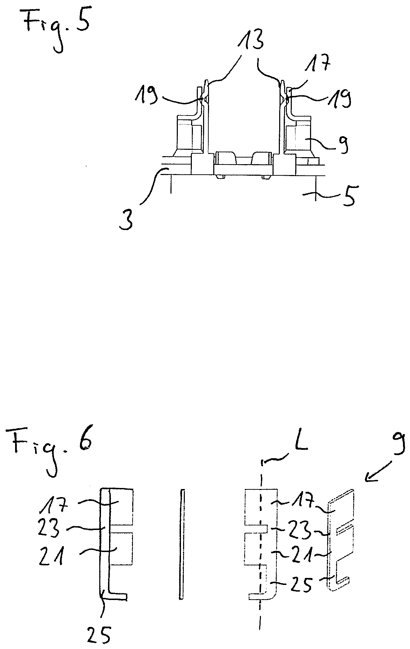

This is shown in more detail in figure 5. The shape of the pins 9 is shown in more detail in figures 6 to 8.

Figure 5 shows a side view of a detail of the motor assembly 1 after the second portion 17 of the pins 9 has been bent to make contact with the terminals 13. As can be seen in figure 5, the second portions 17 of the pins 9 make contact with the terminals 13 and can thus be connected by a welding point 19. According to this embodiment, only two welding points 19 are required to connect the electric motor 5 with the motor control unit 7.

Figure 6 shows different views of a pin 9 of the motor control unit 7 during a processing step. The pin is part of the leadframe of the motor control unit 7 and has a first portion 21, a second portion 17 and a weak portion 23 which is arranged between the first portion 21 and the second portion 17. Furthermore, the pin 9 has a lower part 25 which is connected to or part of the leadframe (not shown).

The weak portion 23 has a lower yield strength than the first portion 21 and the second portion 17 and therefore yields more easily to a bending force which is applied during assembly. In particular, it has a lower yield strength with respect to a bending force which is applied in a certain bending direction. In the embodiment shown in figure 6, the lower yield strength is achieved by a lower material thickness of the pin 9 in the weak portion 23 which is achieved by a cut-out of material.

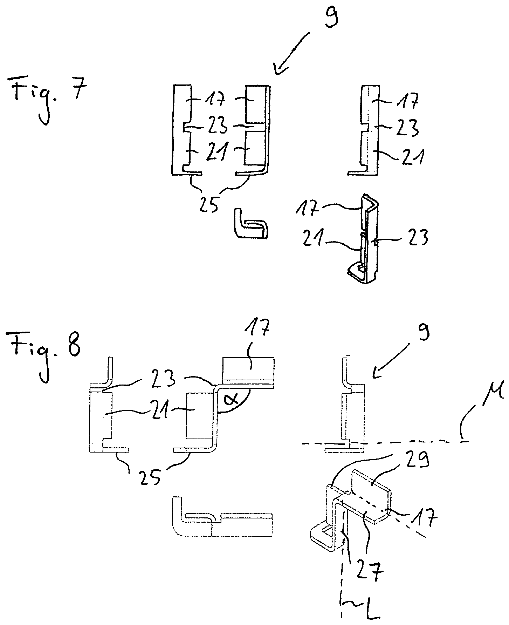

Figure 7 shows several views of the pin 9 according to figure 6 during a later processing step. In the state shown in figures 7 and 8, the pin 9 has been folded around its longitudinal axis L to form an inner part 27 and an outer part 29. The outer part 29 provides a surface area to facilitate welding of the pin 9 to the terminal 13. The weak portion 23, due to the cut-out, has no outer part 29.

The inner part 27 and the outer part 29 are perpendicular to each other.

The pin 9 has also been folded around the horizontal axis, i.e. in the plane of the first side 15 of the motor assembly 1, so that the lower part 25 is parallel to the plane of the first side 15.

Figure 7 shows the pin 9 in an original orientation after the molding process, in which the plastic housing of the motor control unit 7 is formed, while figure 8 shows the pin 9 after the assembly of the motor control unit with the housing 3 and the electric motor 5 and after the second portion 17 has been bent by an angle α of 90 degrees into an assembly orientation to make contact with the terminals 13.

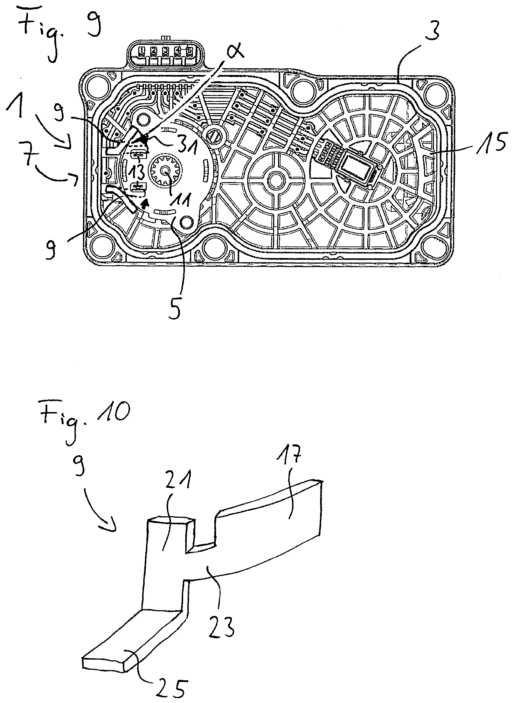

Figure 9 shows a motor assembly 1 according to a second embodiment. This embodiment differs from the first embodiment in the shape of the pins 9 and in the direction of a bending force required to bend the second portion 17 of the pins 9 into an assembly position.

According to the second embodiment, the second portions 17 of the pins 9 are bent horizontally, that is around an axis M perpendicular to the plane of the first side 15, according to the arrow 31 by an angle α of less than 90 degrees.

Figure 10 shows a perspective view of a possible shape of the pins 9 according to the second embodiment in its original orientation.

## Claims

1. Motor assembly (1) comprising:
- an electric motor (5) for actuating a valve of a vehicle, the electric motor (5) having a shaft (11),
- a motor control unit (7) comprising a leadframe at least partially overmolded with a plastic housing, the leadframe supporting a number of motor control devices arranged in the housing, the leadframe having at least two pins (9) providing terminals for electrical connection to the electric motor (5)
- a housing (3) receiving the electric motor (5) and the control unit (7),
- wherein the shaft (11) protrudes on a first side (15) of the motor assembly (1),
- wherein at least two terminals (13) of the electric motor (5) protrude on the first side (15) of the motor assembly (1),
- wherein the pins (9) protrude from the plastic housing on the first side (15) of the motor assembly (1),
- wherein the pins (9) have a first portion (21) being in contact with the plastic housing,
- a second portion (17) for making contact with the terminals (13) of the electric motor (5) and
- a weak portion (23) arranged between the first portion (21) and the second portion (17),
- wherein after assembling the motor control unit (7) and the electric motor (5) with the housing (3), the weak portion (23) of each pin (9) is bent out of an original orientation into an assembly orientation in which the second portion (17) of each pin (9) makes contact with a terminal (13) of the electric motor (5).

2. Motor assembly (1) according to claim 1,
wherein the weak portion (23) is provided by a portion with a reduced material thickness.

3. Motor assembly (1) according to claim 1 or 2,
wherein the weak portion (23) is provided by a portion having no reinforcement structure, while the first portion (21) and the second portion (17) comprise a reinforcement structure.

4. Motor assembly (1) according to claim 3,
wherein the reinforcement structure is provided by a portion of material being arranged perpendicular to the pin (9).

5. Motor assembly (1) according to one of the preceding claims, wherein the first portion (21) and the second portion (17) are perpendicular to each other.

6. Motor assembly (1) according to one of the preceding claims, wherein the second portion (17) is connected to the motor terminal (13) by welding.

7. Process for assembling the motor assembly (1) according to claim 1, the process comprising
- providing a motor control unit (7) according to claim 1,
- providing an electric motor (5) for actuating a valve of a vehicle,
- providing a housing (3) for receiving the motor control unit (7) and the electric motor (5),
- assembling the motor control unit (7) and the electric motor (5) with the housing (3),
- applying a force on the pins (9) to bend them from their original orientation into their assembly orientation,
- connecting the second portions (17) of the pins (9) to terminals (13) of the electric motor (5).

8. Process according to claim 7,
wherein the second portions (17) of the pins (9) are connected to terminals (13) of the electric motor (5) by welding.

9. Process according to claim 7 or 8,
wherein the pins (9) are bent from the original orientation into the assembly orientation vertically by an angle α of 90 degrees.

10. Process according to claim 7 or 8,
wherein the pins (9) are bent from the original orientation into the assembly orientation horizontally by an angle α with α ≤ 90 degrees.

## Patentansprüche

1. Motoranordnung (1), Folgendes umfassend:
- einen Elektromotor (5) zum Betätigen eines Ventils eines Fahrzeugs, wobei der Elektromotor (5) eine Welle (11) aufweist,
- eine Motorsteuereinheit (7), die einen Leitungsrahmen umfasst, der zumindest teilweise mit einem Kunststoffgehäuse überspritzt ist, wobei der Leitungsrahmen eine Anzahl von Motorsteuereinrichtungen trägt, die in dem Gehäuse angeordnet sind, wobei der Leitungsrahmen mindestens zwei Stifte (9) aufweist, die Anschlüsse zum elektrischen Verbinden mit dem Elektromotor (5) bereitstellen,
- ein Gehäuse (3), das den Elektromotor (5) und die Steuereinheit (7) aufnimmt,
- wobei die Welle (11) auf einer ersten Seite (15) der Motoranordnung (1) hervorsteht,
- wobei mindestens zwei Anschlüsse (13) des Elektromotors (5) auf der ersten Seite (15) der Motoranordnung (1) hervorstehen,
- wobei die Stifte (9) auf der ersten Seite (15) der Motoranordnung (1) aus dem Kunststoffgehäuse hervorstehen,
- wobei die Stifte (9) einen ersten Abschnitt (21) aufweisen, der in Kontakt mit dem Kunststoffgehäuse steht,
- einen zweiten Abschnitt (17), um einen Kontakt mit den Anschlüssen (13) des Elektromotors (5) herzustellen, und
- einen schwachen Abschnitt (23) zwischen dem ersten Abschnitt (21) und dem zweiten Abschnitt (17),
- wobei der schwache Abschnitt (23) jedes Stifts (9) nach dem Zusammenfügen der Motorsteuereinheit (7) und des Elektromotors (5) mit dem Gehäuse (3) aus einer ursprünglichen Ausrichtung in eine Anordnungsausrichtung gebogen wird, in welcher der zweite Abschnitt (17) jedes Stifts (9) einen Kontakt mit einem Anschluss (13) des Elektromotors (5) herstellt.

2. Motoranordnung (1) nach Anspruch 1,
wobei der schwache Abschnitt (23) durch einen Abschnitt mit reduzierter Materialdicke bereitgestellt ist.

3. Motoranordnung (1) nach Anspruch 1 oder 2,
wobei der schwache Abschnitt (23) durch einen Abschnitt bereitgestellt ist, der keine Verstärkungsstruktur aufweist, während der erste Abschnitt (21) und der zweite Abschnitt (17) eine Verstärkungsstruktur aufweisen.

4. Motoranordnung (1) nach Anspruch 3,
wobei die Verstärkungsstruktur durch einen Abschnitt von Material bereitgestellt ist, der rechtwinklig zu dem Stift (9) angeordnet ist.

5. Motoranordnung (1) nach einen der vorhergehenden Ansprüche,
wobei der erste Abschnitt (21) und der zweite Abschnitt (17) rechtwinklig zueinander liegen.

6. Motoranordnung (1) nach einen der vorhergehenden Ansprüche,
wobei der zweite Abschnitt (17) durch eine Schweißung mit dem Motoranschluss (13) verbunden ist.

7. Verfahren zum Zusammenfügen der Motoranordnung (1) nach Anspruch 1, wobei das Verfahren Folgendes umfasst:
- Bereitstellen einer Motorsteuereinheit (7) nach Anspruch 1,
- Bereitstellen eines Elektromotors (5) zum Betätigen eines Ventils eines Fahrzeugs,
- Bereitstellen eines Gehäuses (3) zum Aufnehmen der Motorsteuereinheit (7) und des Elektromotors (5),
- Zusammenfügen der Motorsteuereinheit (7) und des Elektromotors (5) mit dem Gehäuse (3),
- Ausüben einer Kraft auf die Stifte (9), um sie aus ihrer ursprünglichen Ausrichtung in ihre Anordnungsausrichtung zu biegen,
- Verbinden der zweiten Abschnitte (17) der Stifte (9) mit Anschlüssen (13) des Elektromotors (5).

8. Verfahren nach Anspruch 7,
wobei die zweiten Abschnitte (17) der Stifte (9) durch Schweißen mit Anschlüssen (13) des Elektromotors (5) verbunden werden.

9. Verfahren nach Anspruch 7 oder 8,
wobei die Stifte (9) vertikal um einen Winkel α von 90 Grad aus der ursprünglichen Ausrichtung in die Anordnungsausrichtung gebogen werden.

10. Verfahren nach Anspruch 7 oder 8,
wobei die Stifte (9) horizontal um einen Winkel α aus der ursprünglichen Ausrichtung in die Anordnungsausrichtung gebogen werden, wobei α ≤ 90 Grad ist.

## Revendications

1. Ensemble moteur (1) comprenant :
- un moteur électrique (5) destiné à actionner une soupape d'un véhicule, le moteur électrique (5) comportant un arbre (11),
- une unité de commande de moteur (7) comprenant une grille de connexion sur au moins une partie de laquelle est surmoulé un boîtier en plastique, la grille de connexion supportant un certain nombre de dispositifs de commande de moteur disposés dans le boîtier, la grille de connexion comportant au moins deux broches (9) formant des bornes pour le raccordement électrique au moteur électrique (5),
- un boîtier (3) recevant le moteur électrique (5) et l'unité de commande (7),
- dans lequel l'arbre (11) fait saillie sur un premier côté (15) de l'ensemble moteur (1),
- dans lequel au moins deux bornes (13) du moteur électrique (5) font saillie sur le premier côté (15) de l'ensemble moteur (1),
- dans lequel les broches (9) font saillie à partir du boîtier en plastique sur le premier côté (15) de l'ensemble moteur (1),
- dans lequel les broches (9) comportent une première partie (21) en contact avec le boîtier en plastique,
- une seconde partie (17) destinée à entrer en contact avec les bornes (13) du moteur électrique (5) et
- une partie de moindre résistance (23) située entre la première partie (21) et la seconde partie (17),
- dans lequel la partie de moindre résistance (23) de chaque broche (9) est, après l'assemblage de l'unité de commande de moteur (7) et du moteur électrique (5) avec le boîtier (3), courbée d'une orientation initiale à une orientation d'assemblage dans laquelle la seconde partie (17) de chaque broche (9) vient en contact avec une borne (13) du moteur électrique (5).

2. Ensemble moteur (1) selon la revendication 1,
dans lequel la partie de moindre résistance (23) est formée par une partie présentant une épaisseur de matériau réduite.

3. Ensemble moteur (1) selon la revendication 1 ou 2,
dans lequel la partie de moindre résistance (23) est formée par une partie ne comportant pas de structure de renforcement, tandis que la première partie (21) et la seconde partie (17) comprennent une structure de renforcement.

4. Ensemble moteur (1) selon la revendication 3,
dans lequel la structure de renforcement est formée par une portion de matériau disposée perpendiculairement à la broche (9).

5. Ensemble moteur (1) selon l'une des revendications précédentes,
dans lequel la première partie (21) et la seconde partie (17) sont perpendiculaires l'une à l'autre.

6. Ensemble moteur (1) selon l'une des revendications précédentes,
dans lequel la seconde partie (17) est raccordée à la borne (13) du moteur par soudage.

7. Procédé d'assemblage de l'ensemble moteur (1) selon la revendication 1, le procédé comprenant :
- préparer une unité de commande de moteur (7) selon la revendication 1,
- préparer un moteur électrique (5) destiné à actionner une soupape d'un véhicule,
- préparer un boîtier (3) destiné à recevoir l'unité de commande de moteur (7) et le moteur électrique (5),
- assembler l'unité de commande de moteur (7) et le moteur électrique (5) avec le boîtier (3),
- appliquer une force sur les broches (9) pour les courber de leur orientation initiale à leur orientation d'assemblage,
- raccorder les secondes parties (17) des broches (9) aux bornes (13) du moteur électrique (5).

8. Procédé selon la revendication 7,
dans lequel les secondes parties (17) des broches (9) sont raccordées aux bornes (13) du moteur électrique (5) par soudage.

9. Procédé selon la revendication 7 ou 8,
dans lequel les broches (9) sont courbées de l'orientation initiale à l'orientation d'assemblage verticalement d'un angle α de 90 degrés.

10. Procédé selon la revendication 7 ou 8,
dans lequel les broches (9) sont courbées de l'orientation initiale à l'orientation d'assemblage horizontalement d'un angle α, α étant ≤ 90 degrés.
